# EUROPÄISCHE PATENTANMELDUNG

(11) **EP 0 563 702 A2**
(43) Veröffentlichungstag der Anmeldung: **06.10.1993**
(21) Anmeldenummer: 93104534.8
(22) Anmeldetag: 19.03.1993
(51) Int. Cl.: B01D 53/04, F25J 3/02, C01B 3/50, C01B 31/18, F25J 3/08

(54) **Verfahren zur Gewinnung von hochreinem Wasserstoff und hochreinem Kohlenmonoxid**

(30) Priorität: 31.03.1992 DE 4210637
(71) Anmelder: Linde Aktiengesellschaft, D-65189 Wiesbaden (DE)
(72) Erfinder: Fabian, Rainer, Dipl.-Ing., W-8192 Geretsried (DE)
(74) Vertreter: Schaefer, Gerhard, Dr.

(57) **Zusammenfassung**

Verfahren zur Gewinnung von hochreinem Wasserstoff und hochreinem Kohlenmonoxid durch Zerlegung eines weitgehend trockenen und CO₂-freien H₂/CO-Rohgasgemisches mittels Druckwechseladsorption und einstufiger partieller Kondensation, indem das H₂/CO-Rohgasgemisch einem Druckwechseladsorptionsverfahren unterworfen wird, wobei ein hochreiner Wasserstoffproduktstrom gewonnen wird, während das beim Regenerieren während des Druckwechseladsorptionsverfahrens anfallende CO-reiche Gas verdichtet, abgekühlt, zumindest teilweise kondensiert und in einen Abscheider geleitet wird, in dem es in eine gasförmige H₂-reiche und eine flüssige CO-reiche Fraktion getrennt wird, wonach die gasförmige H₂-reiche Fraktion erwärmt und dem H₂/CO-Rohgasgemisch vor dessen Zuleiten in die Druckwechseladsorption beigemischt wird. Dabei wird die flüssige CO-reiche Fraktion aus dem Abscheider mindestens teilweise entspannt, erwärmt und in den unteren Bereich einer Doppeltrennsäule geführt, aus deren Sumpf eine flüssige Methanfraktion, aus deren mittleren Bereich eine flüssige hochreine Kohlenmonoxidproduktfraktion und aus deren Kopf eine gasförmige CO-reiche Fraktion abgezogen werden.

## Beschreibung

Die Erfindung betrifft ein Verfahren zur Gewinnung von hochreinem Wasserstoff und hochreinem Kohlenmonoxid durch Zerlegung eines weitgehend trockenen und CO₂-freien H₂/CO-Rohgasgemisches mittels Druckwechseladsorption und einstufiger partieller Kondensation, indem das H₂/CO-Rohgasgemisch einem Druckwechseladsorptionsverfahren unterworfen wird, wobei ein hochreiner Wasserstoffproduktstrom gewonnen wird, während das beim Regenerieren während des Druckwechseladsorptionsverfahrens anfallende CO-reiche Gas verdichtet, abgekühlt, zumindest teilweise kondensiert und in einen Abscheider geleitet wird, in dem es in eine gasförmige H₂-reiche und eine flüssige CO-reiche Fraktion getrennt wird, wonach die gasförmige H₂-reiche Fraktion erwärmt und dem H₂/CO-Rohgasgemisch vor dessen Zuleiten in die Druckwechseladsorption beigemischt wird.

Aufgrund erhöhter Reinheitsanforderungen an die Zerlegungsprodukte, der immer größer werdenden Bedeutung der Betriebskosten einer Anlage, sowie der ständigen Verbesserung der zur Verfügung stehenden thermodynamischen Daten, vollzog sich bei der H₂/CO-Zerlegung in den letzten Jahren ein stetiger technischer Wandel.

Als Hauptlieferant für das H₂/CO-Rohgasgemisch ist nach wie vor der Steam-Reformer zu nennen. Aber auch die Schwerölvergasung mit Sauerstoff - also eine partielle Oxidation - hat, eine billige Sauerstoff-Quelle vorausgesetzt, in den letzten Jahren an Bedeutung als H₂/CO-Lieferant gewonnen.

Der größte Teil des so erzeugten Kohlenmonoxids wird bei der Ameisen- und Essigsäureproduktion verwendet. Ein weiterer Abnehmer findet sich in der Polykarbonatchemie, die als Rohstoff Phosgen hoher Reinheit und dieser wiederum Kohlenmonoxid höchster Reinheit erfordert. Der Methangehalt des Kohlenmonoxids muß hierbei kleiner als 10 Mol-ppm, der Wasserstoffgehalt kleiner als 1000 Mol-ppm sein. Der erzeugte Wasserstoff dient zu den verschiedensten Hydrierzwecken.

Einen Überblick über die im Einsatz befindlichen Verfahren zur Herstellung von Rein-Kohlenmonoxid und Rein-Wasserstoff gibt der Artikel von Dr. Ralph Berninger in LINDE-Berichte aus Technik und Wissenschaft Nr. 62, 1988, Seite 18 bis 23.

Die wesentlichen Nachteile der zum Stand der Technik zählenden Verfahren liegen darin, daß sie mindestens zweier Trennsäulen bedürfen, woraus eine entsprechende Anzahl an Leitungen, Ventilen und den damit verbundenen -Steuer- und Regelvorrichtungen resultiert. Dies erhöht natürlich auch die Störanfälligkeit des Verfahrens.

Aufgabe der vorliegenden Erfindung ist es, ein Verfahren der eingangs genannten Art so weiterzubilden, daß sowohl die Ausbeuten an Kohlenmonoxid und Wasserstoff, bei gleichbleibender bzw. erhöhter Reinheit, gesteigert als auch die Investitionskosten, vor allem jedoch die Betriebskosten einer H₂/CO-Trennanlage gesenkt werden können.

Dies wird erfindungsgemäß dadurch erreicht, daß die flüssige CO-reiche Fraktion aus dem Abscheider mindestens teilweise entspannt, erwärmt und in den unteren Bereich einer Doppeltrennsäule geführt wird, aus deren Sumpf eine flüssige Methanfraktion, aus deren mittleren Bereich eine flüssige hochreine Kohlenmonoxidproduktfraktion und aus deren Kopf eine gasförmige CO-reiche Fraktion abgezogen werden.

Das Erwärmen der aus dem Abscheider abgezogenen CO-reichen Fraktion geschieht in der Regel im Wärmetausch mit abzukühlenden Verfahrensströmen.

Eine Ausgestaltung des erfindungsgemäßen Verfahrens ist dadurch gekennzeichnet, daß bei einer nur teilweisen Zuführung der flüssigen CO-reichen Fraktion in die Doppeltrennsäule ein Teil der flüssigen CO-reichen Fraktion aus dem Abscheider erwärmt und dem CO-reichen Gas vor dessen Verdichten zugeführt wird.

Da der dem Abscheider zugeführte Verfahrensstrom sinnvollerweise im Wärmetausch mit der flüssigen CO-reichen Fraktion abgekühlt wird, kann die Temperatur dieses Stromes und damit letztendlich die Temperatur im Abscheider gesenkt werden. Dies wiederum führt dazu, daß die Menge der am Kopf des Abscheiders abgezogenen H₂-reichen Fraktion abnimmt. Da diese H₂-reiche Fraktion wieder dem H₂/CO-Rohgasgemisch beigemischt wird, erhöht sich die Wasserstoffausbeute der Druckwechseladsorption, wodurch sich zusätzlich die für die Verdichtung des CO-reichen, dem Abscheider zugeführten Stromes notwendige Verdichterleistung reduziert.

Die aus dem Sumpf der Doppeltrennsäule abgezogene flüssige Methanfraktion, die eine Methankonzentration zwischen 75 und 90 % aufweist, wird entspannt, im Wärmetausch mit abzukühlenden Verfahrensströmen erwärmt und verdampft und anschließend als Heizgas aus der Anlage abgeführt. Das in dieser Fraktion mitgeführte Kohlenmonoxid stellt den einzigen Kohlenmonoxid-Verlust des erfindungsgemäßen Verfahrens dar.

Eine weitere Ausgestaltung der Erfindung ist dadurch gekennzeichnet, daß bei einer nur teilweisen Zuführung der flüssigen CO-reichen Fraktion in die Doppeltrennsäule ein weiterer Teil der flüssigen CO-reichen Fraktion aus dem Abscheider entspannt, im Wärmetausch mit einer abzukühlenden, im oberen Bereich der Doppeltrennsäule abgezogenen CO-reichen Fraktion, die oberhalb ihrer Abzugsstelle als Rücklauf auf die Doppeltrennsäule gegeben wird, erwärmt und dem CO-reichen Gas vor dessen Verdichten zugeführt wird.

Zur Verbesserung der Trennungseigenschaften des oberen Doppeltrennsäulenbereiches wird im oberen Teil dieses Bereiches eine gasförmige CO-reiche Fraktion abgezogen. Diese wird im Wärmetausch mit einem Teilstrom der flüssigen CO-reichen Fraktion aus dem Abscheider abgekühlt, dabei teilweise kondensiert und anschließend an einer Stelle, die oberhalb der Abzugsstelle liegt, als Rücklauf auf die Doppeltrennsäule gegeben.

Das erfindungsgemäße Verfahren weiterbildend wird vorgeschlagen, daß die am Kopf der Doppeltrennsäule abgezogene gasförmige CO-reiche Fraktion entspannt, erwärmt und dem CO-reichen Gas vor dessen Verdichten zugeführt wird.

Diese Ausgestaltung des erfindungsgemäßen Verfahrens erhöht einerseits die Kohlenmonoxidausbeute und verringert andererseits den externen Kältebedarf, da die am Kopf der Doppeltrennsäule anfallende gasförmige CO-reiche Fraktion nach ihrer Entspannung im Wärmetausch mit abzukühlenden Verfahrensströmen erwärmt und anschließend wieder dem CO-reichen Rückführstrom beigemischt wird.

Eine weitere Ausgestaltung des erfindungsgemäßen Verfahrens ist dadurch gekennzeichnet, daß bei einer nur teilweisen Zuführung der flüssigen CO-reichen Fraktion in die Doppeltrennsäule ein weiterer Teil der flüssigen CO-reichen Fraktion aus dem Abscheider entspannt und in den unteren Bereich der Doppeltrennsäule als Zwischenrücklauf geführt wird.

Im Gegensatz zu dem Teil der flüssigen CO-reichen Fraktion aus dem Abscheider, der entspannt, erwärmt und anschließend teilweise verdampft in den unteren Bereich der Doppeltrennsäule geführt wird, wird ein weiterer Teilstrom der flüssigen CO-reichen Fraktion aus dem Abscheider lediglich entspannt und somit nahezu vollständig in flüssiger Form als Zwischenrücklauf in den unteren Bereich der Doppeltrennsäule geführt. Mittels dieser Ausgestaltung des erfindungsgemäßen Verfahrens verringert sich der erforderliche Rücklauf am "Kopf" des unteren Bereiches der Doppeltrennsäule, d.h. die Menge an flüssiger CO-reicher Fraktion aus dem Abscheider, die zum Kondensieren des Säulenkopfrücklaufs benötigt wird, verringert sich, woraus wiederum eine Entlastung für den im Prozeß notwendigen Verdichter resultiert.

Das erfindungsgemäße Verfahren weiterbildend wird die aus dem mittleren Bereich der Doppeltrennsäule abgezogene Kohlenmonoxidproduktfraktion entspannt und einem zweiten Abscheider zugeführt, aus dessen Kopf eine gasförmige CO-reiche Fraktion und aus dessen Sumpf eine flüssige hochreine Kohlenmonoxidproduktfraktion abgezogen werden.

Soll die Reinheit der aus dem mittleren Bereich der Doppeltrennsäule abgezogenen Kohlenmonoxidproduktfraktion erhöht werden, so wird diese entspannt und einem zweiten Abscheider zugeführt. Aus dem Sumpf des zweiten Abscheiders wird dann die flüssige hochreine Kohlenmonoxidproduktfraktion gewonnen, während am Kopf des Abscheiders eine gasförmige CO-reiche Fraktion abgezogen wird. Mittels dieser Ausgestaltung des erfindungsgemäßen Verfahrens läßt sich der Wasserstoffgehalt im Kohlenmonoxidproduktstrom auf etwa 1/3 des Gehaltes, den die aus der Doppeltrennsäule abgezogene Kohlenmonoxidproduktfraktion aufweist, reduzieren.

Die Erfindung weiterbildend wird vorgeschlagen, daß die aus dem Sumpf des zweiten Abscheiders abgezogene Kohlenmonoxidproduktfraktion im Wärmetausch mit einer abzukühlenden, im oberen Bereich der Doppeltrennsäule abgezogenen CO-reichen Fraktion, die oberhalb ihrer Abzugsstelle wieder als Rücklauf auf die Doppeltrennsäule gegeben wird, erwärmt wird.

Mittels dieser Ausgestaltung des erfindungsgemäßen Verfahrens dient der flüssige Kohlenmonoxidproduktstrom zum Bereitstellen von benötigter Prozeßkälte. Das Anwärmen des Kohlenmonoxidproduktstromes auf Abgabetemperatur erfolgt in der Regel, da energetisch am sinnvollsten, durch Wärmeaustausch mit abzukühlenden Verfahrensströmen.

Das erfindungsgemäße Verfahren weiterbildend wird die am Kopf des zweiten Abscheiders abgezogene gasförmige CO-reiche Fraktion entspannt, erwärmt und dem CO-reichen Gas vor dessen Verdichten zugeführt.

Da die Erwärmung der am Kopf des zweiten Abscheiders abgezogenen gasförmigen CO-reichen Fraktion sinnvollerweise im Wärmetausch mit abzukühlenden Verfahrensströmen erfolgt, wird auf diese Weise wiederum der Bedarf an Fremdkälte verringert sowie die Kohlenmonoxidausbeute des Verfahrens erhöht.

Das erfindungsgemäße Verfahren sei weiterhin anhand der schematischen Figur beispielhaft beschrieben.

Alle nachfolgenden Mengenangaben zu Verfahrensströmen beziehen sich auf Mol-%.

Über Leitung 1 wird ein gasförmiger Rohgasstrom, bestehend aus H₂ 65,8 %, CO 21,3 %, CH₄ 4,1 %, CO₂ 7,5 % und H₂O 1,2 %, mit einer Temperatur von 333 K und einem Druck von 16,8 bar herangeführt. Der Rohgasstrom stammt in diesem Fall aus einem Steam-Reformer. Der Rohgasstrom wird zunächst einer Kohlendioxid-Wäsche 2 und anschließend über Leitung 3 einer Adsorptionsstufe 4 zugeführt, in der die Trocknung des Rohgasstromes erfolgt. Der Einfachkeit halber werden die Kohlendioxid-Wäsche 2, die Adsorptionsstufe 4 sowie die noch zu beschreibende Druckwechseladsorptions-Stufe 6, aus der der hochreine Wasserstoff gewonnen wird, nur schematisch dargestellt. Der über Leitung 5 mit einer Temperatur von 283 K und einem Druck von 15,8 bar aus der Adsorptionsstufe 4 abgezogene Gasstrom besteht nunmehr nur noch aus H₂ 74,4 %, CO 21,9 % und CH₄ 3,7 %. Er wird nun einem Druckwechseladsorptionsverfahren 6 unterworfen, aus dem über Leitung 7 mit einer Temperatur von 288 K und einem Druck von 15,1 bar eine hochreine gasförmige Wasserstoffproduktfraktion abgezogen wird, die nur mehr 5 Mol-ppm Kohlenmonoxid enthält. Als Druckwechseladsorptionsverfahren findet vorzugsweise ein 5-Adsorber-Verfahren mit zwei aufeinanderfolgenden Druckausgleichschritten - wie z.B. in der US-A 3 564 816 beschrieben - Verwendung. Während Wasserstoff die schwerer adsorbierbare Komponente darstellt, werden Kohlenmonoxid und Methan adsorbiert und anschließend mittels Drucksenkung desorbiert. Zur vollständigen Reinigung der Adsorber erfolgt vor dem Wiederaufdrücken mit dem Rohgasstrom ein Spülen der Adsorber mit einem Teil der Wasserstoffproduktfraktion. Das während der Desorptionschritte anfallende Gas besteht also im wesentlichen aus Kohlenmonoxid, Methan und Wasserstoff. Da das Druckverhältnis Adsorptionsdruck/Desorptionsdruck bei etwa 7 bis 8 liegen sollte, wird der Adsorptionsdruckbereich zwischen 12 und 30 bar und der Desorptionsdruckbereich zwischen 1,5 und 3,5 bar gewählt. Hierbei ist darauf zu achten, daß der gewählte Desorptionsdruck im Bereich des Saugdruckes des Verdichters 9 liegt.

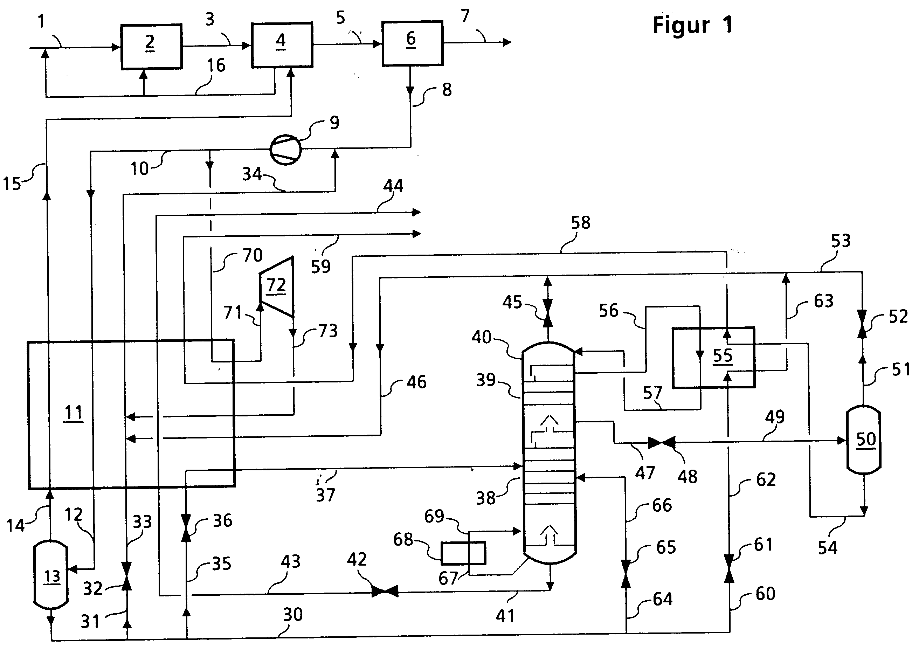

Über Leitung 8 wird mit einer Temperatur von 278 K und einem Druck von 2,0 bar das bei der Regenerierung der Druckwechseladsorptionsanlage 6 anfallende Spülgas, vermischt mit dem CO-reichen Rückführgas - auf das noch näher eingegangen wird -, bestehend aus H₂ 37,8 %, CO 53,3 % und CH₄ 8,9 %, abgezogen und dem Verdichter 9 zugeführt. Der Verdichter 9 steht an dieser Stelle stellvertretend für einen 2- oder 3-stufigen Verdichtungsprozeß von 2,0 auf 18,3 bar; Auf die Anzahl der Verdichtungsschritte wird im folgenden noch eingegangen. Zwischen den einzelnen Verdichtungsschritten erfolgt jedoch jeweils ein Abkühlen des zuvor verdichteten Gasstromes. Das nunmehr auf 18,3 bar verdichtete CO-reiche Gas wird mit einer Temperatur von 310 K in Leitung 10 durch den Wärmetauscher 11 geführt und in ihm im Wärmetausch mit anzuwärmenden Verfahrensströmen auf eine Temperatur von 90 K abgekühlt. Zur Bereitstellung der notwendigen Kälte im Wärmetauscher 11 kann gegebenenfalls neben den anzuwärmenden Verfahrensströmen zusätzlich flüssiger Stickstoff zum Einsatz kommen (in der Figur nicht dargestellt).

Das abgekühlte CO-reiche Gas wird über Leitung 12 Abscheider 13 zugeführt. Am Kopf des Abscheiders 13 wird mit einer Temperatur von 90 K und einem Druck von 17,4 bar über Leitung 14 eine gasförmige H₂-reiche Fraktion abgezogen, bestehend aus H₂ 84,1 %, CO 15,6 % und CH₄ 0,3 %. Diese wird im Wärmetauscher 11 im Wärmetausch mit abzukühlenden Verfahrensströmen angewärmt, über Leitung 15 zunächst der adsorptiven Trocknungsstufe 4 als Regeneriergas zugeführt und daran anschließend über Leitung 16 entweder in die Kohlendioxid-Wäsche 2 geführt und dem Rohgasstrom beigemischt oder dem Rohgasstrom 1 noch vor dessen Eintritt in die KohlendioxidWäsche 2 beigemischt.

Aus dem Sumpf des Abscheiders 13 wird mit einer Temperatur von 90 K und einem Druck von 17,4 bar über Leitung 30 eine flüssige CO-reiche Fraktion abgezogen, bestehend aus H₂ 3,1 %, CO 82,6 % und CH₄ 14,3 %. Ein erster Teil dieser CO-reichen Fraktion wird über Leitung 31 Ventil 32 zugeführt, in ihm auf den Druck, den das CO-reiche Gas in Leitung 8 aufweist, entspannt und anschließend über Leitung 33 Wärmetauscher 11 zugeführt. Dieser Teil der CO-reichen Fraktion aus dem Abscheider 13, der im folgenden als CO-reicher Rückführstrom bezeichnet wird, liefert bei seiner Verdampfung im Wärmetauscher 11 die für den Prozeß notwendige Spitzenkälte. Er wird nach seiner Verdampfung im Wärmetauscher 11 über Leitung 34 wieder dem CO-reichen Gas in Leitung 8 beigemischt.

Ein weiterer Teil der flüssigen CO-reichen Fraktion aus dem Abscheider 13 wird über Leitung 35 Ventil 36 zugeführt, in ihm auf einen Druck von 6,2 bar entspannt und anschließend über Leitung 37 nach erfolgter Anwärmung im Wärmetauscher 11 auf eine Temperatur von 114 K in den unteren Bereich 38 der Doppeltrennsäule 40 geführt. Die Doppeltrennsäule 40 ist in einen unteren Bereich 38 und einen oberen Bereich 39 unterteilt. Aus dem Sumpf der Doppeltrennsäule 40 wird mit einer Temperatur von 125 K und einem Druck von 6,1 bar über Leitung 41 eine flüssige CH₄-reiche Fraktion abgeführt, bestehend aus CO 14,0 % und CH₄ 86,0 %. Diese wird im Ventil 42 auf einen Druck von 1,8 bar entspannt und anschließend über Leitung 43 Wärmetauscher 11 zugeführt. In ihm wird die CH₄-reiche Fraktion im Wärmetausch mit abzukühlenden Verfahrens-strömen auf eine Temperatur von 307 K erwärmt und anschließend über Leitung 44 als Heizgas abgegeben.

Am Kopf der Doppeltrennsäule wird eine gasförmige CO-reiche Fraktion, bestehend aus H₂ 27,8 % und CO 72,2%, mit einer Temperatur von 96 K und einem Druck von 5,9 bar abgezogen, im Ventil 45 auf den Druck des CO-reichen Gases in Leitung 8 entspannt, im Wärmetauscher 11 im Wärmetausch mit abzukühlenden Verfahrensströmen erwärmt und dem CO-reichen Rückführstrom beigemischt.

Aus dem mittleren Bereich der Doppeltrennsäule 40 wird mit einer Temperatur von 101 K und einem Druck von 5,9 bar über Leitung 47 eine flüssige Kohlenmonoxidproduktfraktion abgezogen die nur mehr 500 Mol-ppm H₂ und 5 Mol-ppm CH₄ enthält. Diese wird in Ventil 48 auf einen Druck von 4,7 bar entspannt und über Leitung 49 einem zweiten Abscheider 50 zugeführt. Am Kopf des Abscheiders 50 wird mit einer Temperatur von 98 K und einem Druck von 4,7 bar über Leitung 51 eine gasförmige CO-reiche Fraktion abgezogen, im Ventil 52 auf den Druck des CO-reichen Gases in Leitung 8 entspannt und dem CO-reichen Rückführgas über die Leitungen 53 und 46 zugeführt. Die am Sumpf des Abscheiders 50 mit einer Temperatur von 98 K und einem Druck von 4,7 bar abgezogene flüssige, hochreine Kohlenmonoxidproduktfraktion, die nun nur mehr 200 Mol-ppm H₂ und 5 Mol-ppm CH₄ enthält, wird einem Wärmetauscher 55 zugeführt. In ihm wird sie im Wärmetausch mit einer im oberen Bereich 39 der Doppeltrennsäule 40 abgezogenen gasförmigen CO-reichen Fraktion 56, die über Leitung 57 wieder oberhalb ihrer Abzugsstelle auf die Doppeltrennsäule 40 gegeben wird, erwärmt. Anschließend wird die Kohlenmonoxidproduktfraktion über Leitung 58 in den Wärmetauscher 11 geführt, dort im Wärmetausch mit abzukühlenden Verfahrensströmen auf die gewünschte Abgabetemperatur erwärmt und über Leitung 59 als hochreines Kohlenmonoxidprodukt abgegeben. Da die Kälte der durch den Wärmetauscher 55 geführten Kohlenmonoxidproduktfraktion in der Regel nicht ausreicht um die vom Kopf der Doppeltrennsäule 40 abgezogene CO-reiche Fraktion zu kondensieren wird über Leitung 60 ein weiterer Teil der füssigen CO-reichen Fraktion aus dem Abscheider 13 herangeführt, im Ventil 61 entspannt, über Leitung 62 in den Wärmetauscher 55 geleitet, in ihm erwärmt und anschließend über die Leitungen 63, 53 und 46 dem CO-reichen Rückführstrom zugeführt.

Zur Verringerung der benötigten Kopfkühlung und Sumpfheizung der Doppeltrennsäule 40 wird ein weiterer Teil der flüssigen CO-reichen Fraktion aus dem Abscheider 13 über Leitung 64 Ventil 65 zugeführt und nach erfolgter Entspannung über Leitung 66 als Zwischenrücklauf auf die Doppeltrennsäule 40 gegeben. Des weiteren wird am Sumpf der Doppeltrennsäule 40 über Leitung 67 ein Teil der CH₄-reichen Fraktion abgezogen, im Wärmetauscher 68 verdampft und anschließend über Leitung 69 oberhalb der Abzugsstelle wieder in die Doppeltrennsäule 40 geführt.

Neben der bereits erwähnten Kältebereitstellung mittels flüssigen Stickstoffs kann auch durch die kälteleistende Entspannung eines Teilstromes des verdichteten CO-reichen Gases die zusätzlich für das erfindungsgemäße Verfahren benötigte Kälte zur Verfügung gestellt werden. Wie bereits erwähnt erfolgt das Verdichten des CO-reichen Gases im Verdichter 9 zwei- oder dreistufig mit jeweils anschließendem Abkühlen des zuvor verdichteten Gases. Entsprechend der Größe der Anlage, in der das erfindungsgemäße Verfahren zur Anwendung kommt, wird ein Teilstrom des verdichteten CO-reichen Gases nach der 2. oder 3. Verdichterstufe abgezweigt - in der Figur durch Leitung 70 dargestellt -, in den Wärmetauscher 11 geführt und im Wärmetausch mit anzuwärmenden Verfahrensströmen abgekühlt. Daran anschließend wird der abgekühlte Gasstrom über Leitung 71 in die Entspannungsturbine 72 geleitet, kälteleistend entspannt und über Leitung 73 durch den Wärmetauscher 11 zu dem CO-reichen Rückführstrom geführt.

## Patentansprüche

1. Verfahren zur Gewinnung von hochreinem Wasserstoff und hochreinem Kohlenmonoxid durch Zerlegung eines weitgehend trockenen und CO₂-freien H₂/CO-Rohgasgemisches mittels Druckwechseladsorption und einstufiger partieller Kondensation, indem das H₂/CO-Rohgasgemisch einem Druckwechseladsorptionsverfahren unterworfen wird, wobei ein hochreiner Wasserstoffproduktstrom gewonnen wird, während das beim Regenerieren während des Druckwechseladsorptionsverfahrens anfallende CO-reiche Gas verdichtet, abgekühlt, zumindest teilweise kondensiert und in einen Abscheider geleitet wird, in dem es in eine gasförmige H₂-reiche und eine flüssige CO-reiche Fraktion getrennt wird, wonach die gasförmige H₂-reiche Fraktion erwärmt und dem H₂/CO-Rohgasgemisch vor dessen Zuleiten in die Druckwechseladsorption beigemischt wird, dadurch **gekennzeichnet**, daß die flüssige CO-reiche Fraktion aus dem Abscheider mindestens teilweise entspannt, erwärmt und in den unteren Bereich einer Doppeltrennsäule geführt wird, aus deren Sumpf eine flüssige Methanfraktion, aus deren mittleren Bereich eine flüssige hochreine Kohlenmonoxidproduktfraktion und aus deren Kopf eine gasförmige CO-reiche Fraktion abgezogen werden.

2. Verfahren nach Anspruch 1, dadurch gekennzeichnet, daß bei einer nur teilweisen Zuführung der flüssigen CO-reichen Fraktion in die Doppeltrennsäule ein Teil der flüssigen CO-reichen Fraktion aus dem Abscheider erwärmt und dem CO-reichen Gas vor dessen Verdichten zugeführt wird.

3. Verfahren nach den Ansprüchen 1 oder 2, dadurch gekennzeichnet, daß bei einer nur teilweisen Zuführung der flüssigen CO-reichen Fraktion in die Doppeltrennsäule ein weiterer Teil der flüssigen CO-reichen Fraktion aus dem Abscheider entspannt, im Wärmetausch mit einer abzukühlenden, im oberen Bereich der Doppeltrennsäule abgezogenen CO-reichen Fraktion, die oberhalb ihrer Abzugsstelle als Rücklauf auf die Doppeltrennsäule gegeben wird, erwärmt und dem CO-reichen Gas vor dessen Verdichten zugeführt wird.

4. Verfahren nach einem der Ansprüche 1 bis 3, dadurch gekennzeichnet, daß die am Kopf der Doppeltrennsäule abgezogene gasförmige CO-reiche Fraktion entspannt, erwärmt und dem CO-reichen Gas vor dessen Verdichten zugeführt wird.

5. Verfahren nach einem der Ansprüche 1 bis 4, dadurch gekennzeichnet, daß bei einer nur teilweisen-Zuführung der flüssigen CO-reichen Fraktion in die Doppeltrennsäule ein weiterer Teil der flüssigen CO-reichen Fraktion aus dem Abscheider entspannt und in den unteren Bereich der Doppeltrennsäule als Zwischenrücklauf geführt wird.

6. Verfahren nach einem der Ansprüche 1 bis 5, dadurch gekennzeichnet, daß die aus dem mittleren Bereich der Doppeltrennsäule abgezogene Kohlenmonoxidproduktfraktion entspannt und einem zweiten Abscheider zugeführt wird, aus dessen Kopf eine gasförmige CO-reiche Fraktion und aus dessen Sumpf eine flüssige hochreine Kohlenmonoxidproduktfraktion abgezogen werden.

7. Verfahren nach Anspruch 6, dadurch gekennzeichnet, daß die aus dem Sumpf des zweiten Abscheiders abgezogene Kohlenmonoxidproduktfraktion im Wärmetausch mit einer abzukühlenden, im oberen Bereich der Doppeltrennsäule abgezogenen CO-reichen Fraktion, die oberhalb ihrer Abzugsstelle wieder als Rücklauf auf die Doppeltrennsäule gegeben wird, erwärmt wird.

8. Verfahren nach Anspruch 6 oder 7, dadurch gekennzeichnet, daß die am Kopf des zweiten Abscheiders abgezogene gasförmige CO-reiche Fraktion entspannt, erwärmt und dem CO-reichen Gas vor dessen Verdichten zugeführt wird.
